# EUROPEAN PATENT APPLICATION

(11) **EP 4 525 350 A1**
(43) Date of publication of application: **19.03.2025**
(21) Application number: 22941653.2
(22) Date of filing: 11.05.2022
(51) Int. Cl.: H04L 9/12, H04L 9/08

(54) **KEY EXCHANGE SYSTEM, QKD DEVICE, BASE DEVICE, METHOD, AND PROGRAM**

(71) Applicant: Nippon Telegraph And Telephone Corporation, Chiyoda-ku Tokyo 100-8116 (JP)
(72) Inventor: KIYOMURA, Yutaro, Musashino-shi, Tokyo 180-8585 (JP); CHIKARA, Sakae, Musashino-shi, Tokyo 180-8585 (JP); KOBAYASHI, Tetsutaro, Musashino-shi, Tokyo 180-8585 (JP); CHIDA, Koji, Musashino-shi, Tokyo 180-8585 (JP); NATSUKAWA, Katsuyuki, Musashino-shi, Tokyo 180-8585 (JP); TANIGUCHI, Atsushi, Musashino-shi, Tokyo 180-8585 (JP); SHIRAI, Daisuke, Musashino-shi, Tokyo 180-8585 (JP); TAKASUGI, Koichi, Musashino-shi, Tokyo 180-8585 (JP)
(74) Representative: Murgitroyd & Company
(86) International application number: PCT/JP2022/019986
(87) International publication number: WO 2023/218573

(57) **Abstract**

A key exchange system according to an aspect of the present disclosure is a key exchange system including: a quantum key distribution (QKD) network including a plurality of QKD apparatuses that performs exchange of a key by using a quantum key distribution protocol and a plurality of key management apparatuses that relays the key; and a plurality of hub apparatuses that performs encrypted communication by using the key received from the key management apparatuses, in which one of the QKD apparatuses includes a transmission unit configured to, in a case where the key is transmitted to an unreliable key management apparatus among the plurality of key management apparatuses, use a secret key shared in advance with a hub apparatus that receives the key via the unreliable key management apparatus, and transmit the key subjected to an exclusive OR with the secret key to the unreliable key management apparatus, and, and the hub apparatus includes a key acquisition unit configured to, in a case where the key is received from the unreliable key management apparatus among the plurality of key management apparatuses, use the secret key to calculate an exclusive OR of the secret key and the key.

## Description

### Technical Field

The present disclosure relates to a key exchange system, a QKD apparatus, a hub apparatus, a method, and a program.

### Background Art

It is known that it becomes possible to solve a mathematical problem (a prime factorization problem or a discrete logarithm problem), that is a security basis of existing cipher, in a realistic time by practical application of a quantum computer. For this reason, there is a risk that an RSA cipher or an elliptic curve cipher that is an existing cipher may be compromised, and it is necessary to shift to encryption technology that cannot be decrypted even by a quantum computer.

As encryption technologies that cannot be decrypted by a quantum computer, there are post-quantum cryptography (PQC) and quantum key distribution (QKD). In addition, there is a QKD network as a technology that implements secure key exchange in a wide area by networking QKD and performing key relay via a key management apparatus (for example, Non Patent Literature 1).

### Citation List

### Non Patent Literature

Non Patent Literature 1: ITU-T Y.3803, Internet <URL: https://www.itu.int/rec/T-REC-Y.3803-202012-I/en>

### Summary of Invention

### Technical Problem

However, in the conventional QKD network, since key management apparatuses also have key information, there is a problem that security cannot be guaranteed in a case where some key management apparatuses are unreliable.

The present disclosure has been made in view of the above points, and an object thereof is to provide a technology capable of performing secure key exchange by a QKD network even in a case where there is an unreliable key management apparatus.

### Solution to Problem

A key exchange system according to an aspect of the present disclosure is a key exchange system including: a quantum key distribution (QKD) network including a plurality of QKD apparatuses that performs exchange of a key by using a quantum key distribution protocol and a plurality of key management apparatuses that relays the key; and a plurality of hub apparatuses that performs encrypted communication by using the key received from the key management apparatuses, in which one of the QKD apparatuses includes a transmission unit configured to, in a case where the key is transmitted to an unreliable key management apparatus among the plurality of key management apparatuses, use a secret key shared in advance with a hub apparatus that receives the key via the unreliable key management apparatus, and transmit the key subjected to an exclusive OR with the secret key to the unreliable key management apparatus, and, and the hub apparatus includes a key acquisition unit configured to, in a case where the key is received from the unreliable key management apparatus among the plurality of key management apparatuses, use the secret key to calculate an exclusive OR of the secret key and the key.

### Advantageous Effects of Invention

Provided is a technology capable of performing secure key exchange by a QKD network even in a case where there is an unreliable key management apparatus.

### Brief Description of Drawings

[Fig. 1] Fig. 1 is a diagram illustrating an example of key exchange by a QKD network.
[Fig. 2] Fig. 2 is a diagram illustrating an example of an overall configuration of a key exchange system in Example 1.
[Fig. 3] Fig. 3 is a sequence diagram illustrating an example of processing executed by the key exchange system in Example 1.
[Fig. 4] Fig. 4 is a diagram illustrating an example of an overall configuration of a key exchange system in Example 2.
[Fig. 5] Fig. 5 is a sequence diagram illustrating an example of processing executed by the key exchange system in Example 2.
[Fig. 6] Fig. 6 is a diagram illustrating an example of an overall configuration of a key exchange system in Example 3.
[Fig. 7] Fig. 7 is a sequence diagram illustrating an example of processing executed by the key exchange system in Example 3.
[Fig. 8] Fig. 8 is a diagram illustrating an example of an overall configuration of a key exchange system in Example 4.
[Fig. 9] Fig. 9 is a sequence diagram illustrating an example of processing executed by the key exchange system in Example 4.
[Fig. 10] Fig. 10 is a diagram illustrating an example of a hardware configuration of a computer.

### Description of Embodiments

Hereinafter, one embodiment of the present invention will be described.

### <Key Exchange by QKD Network>

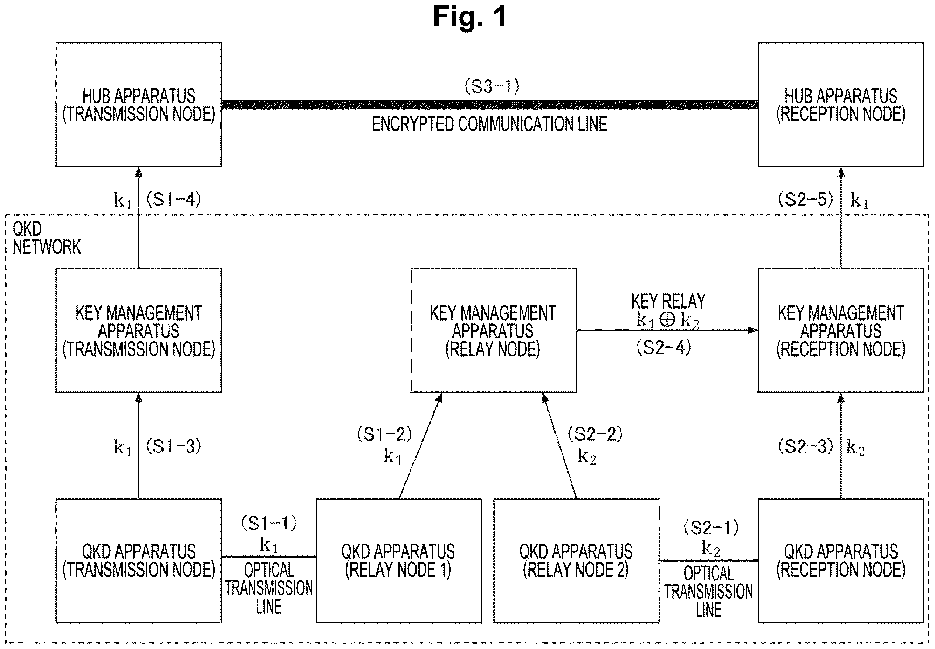

Hereinafter, an example of key exchange by a conventional QKD network will be described with reference to Fig. 1. Note that, for details of the QKD network, refer to, for example, Non Patent Literature 1 described above.

In Fig. 1, a case is assumed where encrypted communication is performed between a hub apparatus (transmission node) existing in a hub on a data transmission side and a hub apparatus (reception node) existing in a hub on a data reception side. At this time, it is assumed that there are a key management apparatus (transmission node) and a QKD apparatus (transmission node) in the hub on the data transmission side, and there are a key management apparatus (reception node) and a QKD apparatus (reception node) in the hub on the data reception side. In addition, it is assumed that there is a relay hub between the hub on the data transmission side and the hub on the data reception side, and in the relay hub, there are a key management apparatus (relay node), a QKD apparatus (relay node 1) connected to the QKD apparatus (transmission node) through an optical transmission line, and a QKD apparatus (relay node 2) connected to the QKD apparatus (reception node) through an optical transmission line. Note that a QKD network is configured by the key management apparatuses and communication lines therebetween, and the QKD apparatuses and optical transmission lines therebetween.

At this time, a key k₁ for encrypting communication between the hub apparatus (transmission node) and the hub apparatus (reception node) is shared (key exchange) by S1-1 to S1-4, S2-1 to S2-5, and S3-1 below.

The QKD apparatus (transmission node) shares k₁ with the QKD apparatus (relay node 1) via the optical transmission line by using a QKD protocol (for example, the BB84 scheme or the like) (S1-1). The QKD apparatus (relay node 1) transmits k₁ to the key management apparatus (relay node) (S1-2). The QKD apparatus (transmission node) transmits k₁ to the key management apparatus (transmission node) (S1-3). Then, the key management apparatus (transmission node) transmits k₁ to the hub apparatus (transmission node) (S1-4).

On the other hand, the QKD apparatus (relay node 2) shares k₂ with the QKD apparatus (reception node) via the optical transmission line by using the QKD protocol (for example, the BB84 scheme or the like) (S2-1). The QKD apparatus (relay node 2) transmits k₂ to the key management apparatus (relay node) (S2-2). The QKD apparatus (reception node) transmits k₂ to the key management apparatus (reception node) (S2-3). The key management apparatus (relay node) transmits an operation result of an exclusive OR (XOR) of k₁ and k₂ to the key management apparatus (reception node) (S2-4). This is called a key relay. Then, the key management apparatus (reception node) transmits a result (that is, k₁) of an operation of an exclusive OR of, the operation result of the exclusive OR of k₁ and k₂, and k₂ to the hub apparatus (reception node) (S2-5).

As a result, the hub apparatus (transmission node) and the hub apparatus (reception node) can perform encrypted communication by using k₁ (S3-1).

As described above, in the QKD network, the key management apparatuses have key information. For this reason, in a case where some key management apparatuses are unreliable, there is a problem that security cannot be guaranteed. Thus, hereinafter, a key exchange method capable of concealing key information from an unreliable key management apparatus is proposed. Note that the unreliable key management apparatus is, for example, a key management apparatus posing a risk of, for example, leaking the key information.

### <Proposed Method>

In this proposed method, to conceal key information from an unreliable key management apparatus, a new secret key sk is introduced, and the new secret key sk is shared between a QKD apparatus that passes a QKD key to an unreliable key management apparatus and a hub apparatus that receives the QKD key from an unreliable key management apparatus. Then, not the QKD key itself but a result of taking an XOR with the secret key sk is passed to the unreliable key management apparatus. As a result, the QKD key can be concealed from the unreliable key management apparatus. On the other hand, the hub apparatus that has received the XOR of the QKD key and the secret key sk from the unreliable key management apparatus further takes an XOR with the secret key sk. As a result, the hub apparatus can obtain the original QKD key.

Hereinafter, Examples 1 to 4 of a key exchange system that shares a QKD key by the above proposed method will be described. Note that, in each of examples below, a case where there is one relay hub will be described for the sake of simplicity, but the number of relay hubs is not limited to one, and each example below can be similarly applied even in a case where there is a plurality of relay hubs.

### [Example 1]

In Example 1, a case where a key management apparatus (relay node) and a key management apparatus (reception node) are unreliable will be described.

### • Overall Configuration of Key Exchange System

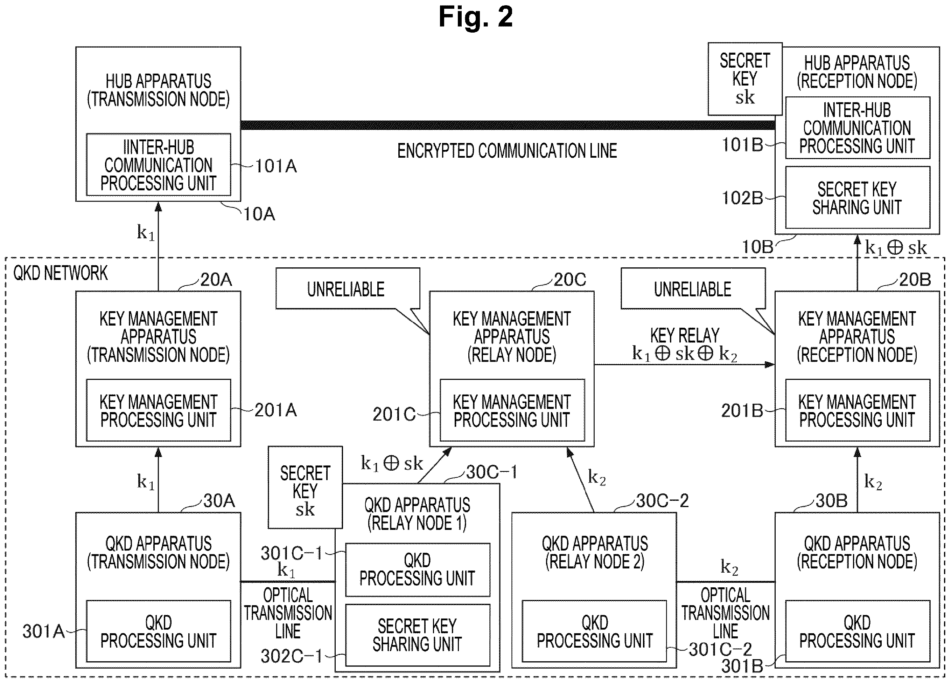

An example of an overall configuration of a key exchange system in Example 1 will be described with reference to Fig. 2.

As illustrated in Fig. 2, the key exchange system in the present example includes a plurality of hub apparatuses 10, a plurality of key management apparatuses 20, and a plurality of QKD apparatuses 30. Hereinafter, a hub apparatus 10 existing in a hub on the data transmission side is referred to as a "hub apparatus 10A", and a hub apparatus 10 existing in a hub on the data reception side is referred to as a "hub apparatus 10B". Similarly, a key management apparatus 20 and a QKD apparatus 30 existing in the hub on the data transmission side are referred to as a "key management apparatus 20A" and a "QKD apparatus 30A", respectively, and a key management apparatus 20 and a QKD apparatus 30 existing in the hub on the data reception side are referred to as a "key management apparatus 20B" and a "QKD apparatus 30B", respectively. In addition, a key management apparatus 20 existing in a relay hub is referred to as a "key management apparatus 20C", a QKD apparatus 30 connected to the QKD apparatus 30A through an optical transmission line is referred to as a "QKD apparatus 30C-1", and a QKD apparatus 30 connected to the QKD apparatus 30B through an optical transmission line is referred to as a "QKD 30C-2". In the present example, the key management apparatus 20B and the key management apparatus 20C are unreliable key management apparatuses 20. Note that a QKD network is configured by the key management apparatuses 20 and communication lines therebetween, and the QKD apparatuses 30 and optical transmission lines therebetween.

A hub apparatus 10 is an information processing apparatus (computer) that performs encrypted communication with a hub apparatus 10 existing in another hub. The hub apparatus 10 includes an inter-hub communication processing unit 101 that executes encrypted communication with the hub apparatus 10 existing in the other hub, various types of processing for performing the encrypted communication, and the like. The inter-hub communication processing unit 101 is implemented, for example, by processing that one or more programs installed in the hub apparatus 10 cause a processor such as a central processing unit (CPU) to execute. Hereinafter, the inter-hub communication processing unit 101 included in the hub apparatus 10A is referred to as an "inter-hub communication processing unit 101A", and the inter-hub communication processing unit 101 included in the hub apparatus 10B is referred to as an "inter-hub communication processing unit 101B".

In addition, in the present example, the hub apparatus 10B includes a secret key sharing unit 102B for sharing the secret key sk with the QKD apparatus 30C-1. The secret key sharing unit 102B is implemented, for example, by processing that one or more programs installed in the hub apparatus 10B cause a processor such as a CPU to execute.

A key management apparatus 20 is an information processing apparatus (computer) that manages a key shared among the QKD apparatuses 30 and performs key relay to a key management apparatus 20 existing in another hub. The key management apparatus 20 includes a key management processing unit 201 that executes various types of processing such as management of a key shared among the QKD apparatuses 30 and key relay. The key management processing unit 201 is implemented, for example, by processing that one or more programs installed in the key management apparatus 20 cause a processor such as a CPU to execute. Hereinafter, the key management processing unit 201 included in the key management apparatus 20A is referred to as a "key management processing unit 201A", the key management processing unit 201 included in the key management apparatus 20B is referred to as a "key management processing unit 201B", and the key management processing unit 201 included in the key management apparatus 20C is referred to as a "key management processing unit 201C".

A QKD apparatus 30 is an information processing apparatus (computer) that shares a QKD key with a QKD apparatus 30 existing in another hub via an optical transmission line by using the QKD protocol (for example, the BB84 scheme or the like) and executes various types of processing related thereto. The QKD apparatus 30 includes a QKD processing unit 301 that shares a QKD key with the QKD apparatus 30 existing in the other hub via an optical transmission line by using the QKD protocol and executes various types of processing related thereto. The QKD processing unit 301 is implemented, for example, by processing that one or more programs installed in the QKD apparatus 30 cause a processor such as a CPU to execute. Hereinafter, the QKD processing unit 301 included in the QKD apparatus 30A is referred to as a "QKD processing unit 301A", the QKD processing unit 301 included in the QKD apparatus 30B is referred to as a "QKD processing unit 301B", the QKD processing unit 301 included in the QKD apparatus 30C-1 is referred to as a "QKD processing unit 301C-1", and the QKD processing unit 301 included in the QKD apparatus 30C-2 is referred to as a "QKD processing unit 301C-2".

In addition, in the present example, the QKD apparatus 30C-1 includes a secret key sharing unit 302C-1 for sharing the secret key sk with the hub apparatus 10B. The secret key sharing unit 302C-1 is implemented, for example, by processing that one or more programs installed in the QKD apparatus 30C-1 cause a processor such as a CPU to execute.

### • Processing Executed by Key Exchange System

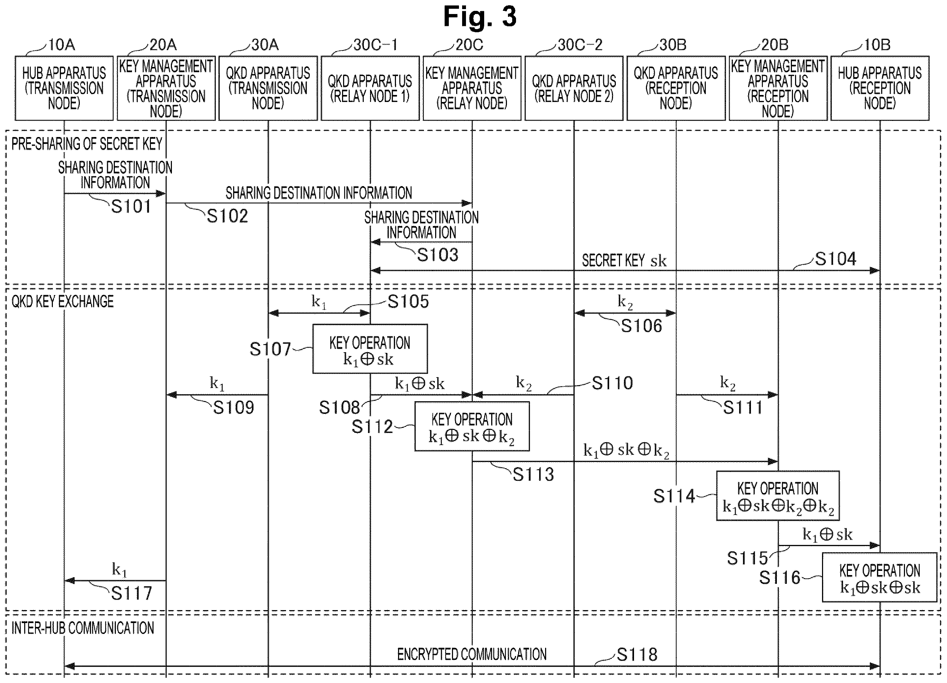

An example of processing executed by the key exchange system in Example 1 will be described with reference to Fig. 3. Note that the processing executed by the key exchange system in the present example is roughly divided into pre-sharing of the secret key sk (steps S101 to S104), QKD key exchange (steps S105 to S117), and inter-hub communication (step S118).

The inter-hub communication processing unit 101A of the hub apparatus 10A transmits sharing destination information to the key management apparatus 20A (step S101). The sharing destination information is information for sharing the secret key sk (for example, information regarding designation of a key sharing protocol used for sharing the secret key sk**,** an initiator and a responder when the key sharing protocol is executed, and the like). In the present example, it is assumed that one of the QKD apparatus 30C-1 or the hub apparatus 10B is an initiator and the other is a responder.

The key management processing unit 201A of the key management apparatus 20A transmits the sharing destination information to the key management apparatus 20C (step S102). The key management processing unit 201C of the key management apparatus 20C transmits the sharing destination information to the QKD apparatus 30C-1 (step S103).

The secret key sharing unit 302C-1 of the QKD apparatus 30C-1 and the secret key sharing unit 102B of the hub apparatus 10B share the secret key sk by using the key sharing protocol designated in the sharing destination information (step S104).

The QKD processing unit 301A of the QKD apparatus 30A and the QKD processing unit 301C-1 of the QKD apparatus 30C-1 share a QKD key k₁ via the optical transmission line by using the QKD protocol (for example, the BB84 scheme or the like) (step S105).

Similarly, the QKD processing unit 301B of the QKD apparatus 30B and the QKD processing unit 301C-2 of the QKD apparatus 30C-2 share a QKD key k₂ via the optical transmission line by using the QKD protocol (for example, the BB84 scheme or the like) (step S106).

The QKD processing unit 301C-1 of the QKD apparatus 30C-1 operates an exclusive OR of k₁ and sk (step S107). The QKD processing unit 301C-1 of the QKD apparatus 30C-1 transmits a result of the operation to the key management apparatus 20C (step S108).

The QKD processing unit 301A of the QKD apparatus 30A transmits k₁ to the key management apparatus 20A (step S109).

The QKD processing unit 301C-2 of the QKD apparatus 30C-2 transmits k₂ to the key management apparatus 20C (step S110).

The QKD processing unit 301B of the QKD apparatus 30B transmits k₂ to the key management apparatus 20B (step S111).

The key management processing unit 201C of the key management apparatus 20C operates an exclusive OR of k₁, sk, and k₂ (step S112). The key management processing unit 201C of the key management apparatus 20C transmits (key relay) a result of the operation to the key management apparatus 20B (step S113).

The key management processing unit 201B of the key management apparatus 20B operates an exclusive OR of the result of the operation received from the key management apparatus 20C and k₂ (that is, an exclusive OR of k₁, sk, k₂, and k₂) (step S114). The key management processing unit 201B of the key management apparatus 20B transmits a result of the operation to the hub apparatus 10B (step S115).

The inter-hub communication processing unit 101B of the hub apparatus 10B operates an exclusive OR of the result of the operation received from the key management apparatus 20B and sk (that is, an exclusive OR of k₁, sk, and sk) (step S116). As a result, the hub apparatus 10B can obtain k₁.

The key management processing unit 201A of the key management apparatus 20A transmits k₁ to the hub apparatus 10A (step S117). As a result, the hub apparatus 10A can obtain k₁.

As described above, the inter-hub communication processing unit 101A of the hub apparatus 10A and the inter-hub communication processing unit 101B of the hub apparatus 10B can perform encrypted communication with k₁ as an encryption key (step S118).

### [Example 2]

In Example 2, a case where the key management apparatus (transmission node) is unreliable will be described. Note that, in Example 2, differences from Example 1 will be described, and the description of the same points as those of Example 1 will be omitted as appropriate.

### • Overall Configuration of Key Exchange System

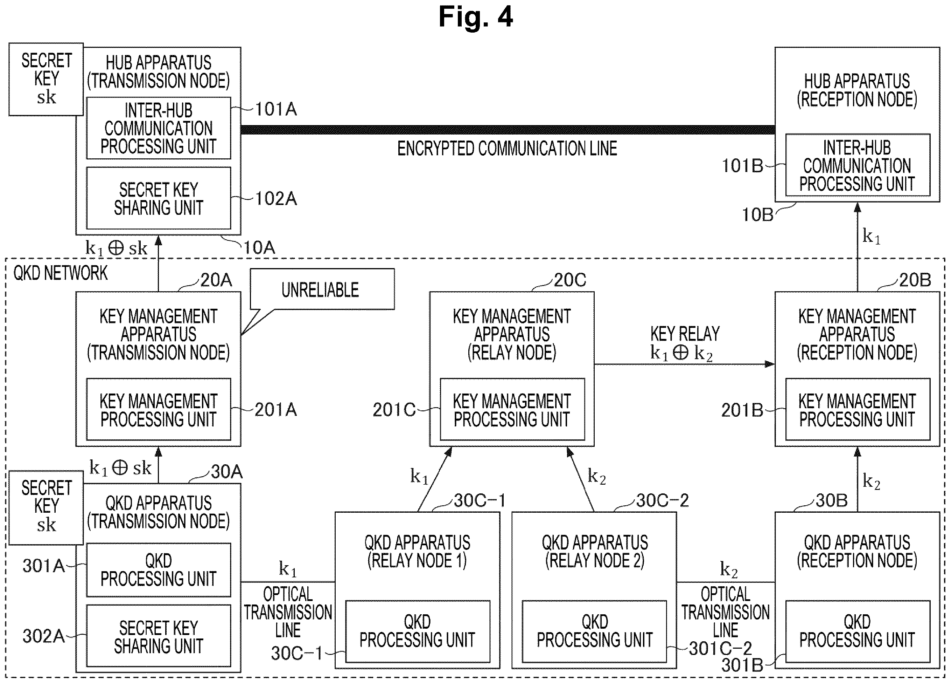

An example of an overall configuration of a key exchange system in Example 2 will be described with reference to Fig. 4.

As illustrated in Fig. 4, the key exchange system in the present example includes a plurality of hub apparatuses 10, a plurality of key management apparatuses 20, and a plurality of QKD apparatuses 30. In the present example, the key management apparatus 20A is an unreliable key management apparatus 20.

The differences from Example 1 are that the hub apparatus 10A includes a secret key sharing unit 102A for sharing the secret key sk with the QKD apparatus 30A, and that the QKD apparatus 30A includes a secret key sharing unit 302A for sharing the secret key sk with the hub apparatus 10A. In addition, the differences from Example 1 are that the hub apparatus 10B does not include the secret key sharing unit 102B, and that the QKD apparatus 30C-1 does not include the secret key sharing unit 302C-1. The secret key sharing unit 102A is implemented, for example, by processing that one or more programs installed in the hub apparatus 10A cause a processor such as a CPU to execute. The secret key sharing unit 302A is implemented, for example, by processing that one or more programs installed in the QKD apparatus 30A cause a processor such as a CPU to execute.

### • Processing Executed by Key Exchange System

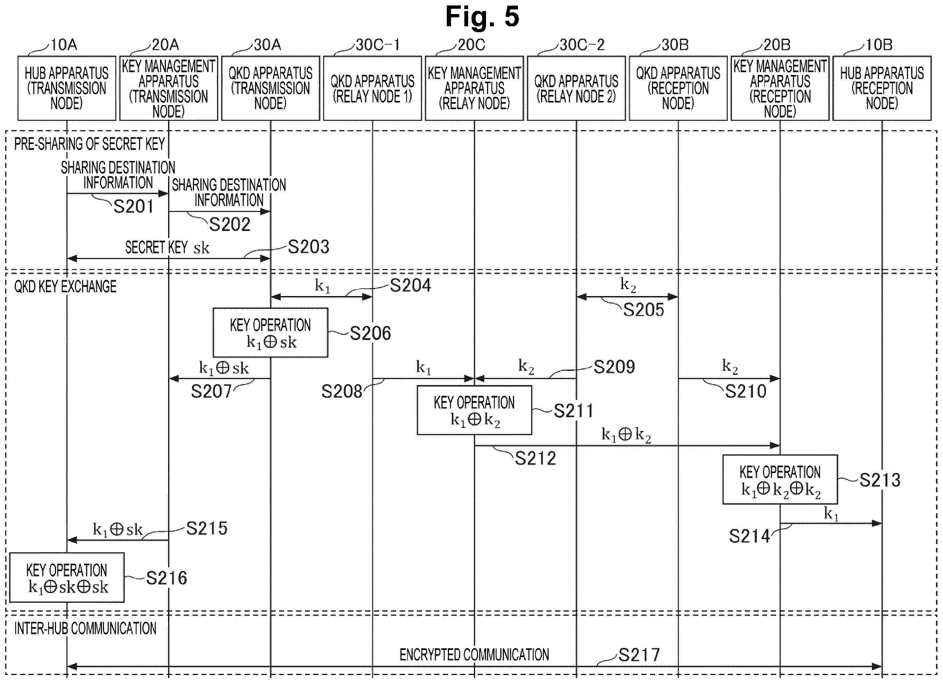

An example of processing executed by the key exchange system in Example 2 will be described with reference to Fig. 5.

The inter-hub communication processing unit 101A of the hub apparatus 10A transmits sharing destination information to the key management apparatus 20A (step S201). In the present example, it is assumed that one of the QKD apparatus 30A or the hub apparatus 10A is an initiator and the other is a responder.

The key management processing unit 201A of the key management apparatus 20A transmits the sharing destination information to the QKD apparatus 30A (step S202).

The secret key sharing unit 302A of the QKD apparatus 30A and the secret key sharing unit 202A of the hub apparatus 10A share the secret key sk by using the key sharing protocol designated in the sharing destination information (step S203).

The QKD processing unit 301A of the QKD apparatus 30A and the QKD processing unit 301C-1 of the QKD apparatus 30C-1 share the QKD key k₁ via the optical transmission line by using the QKD protocol (for example, the BB84 scheme or the like) (step S204).

Similarly, the QKD processing unit 301B of the QKD apparatus 30B and the QKD processing unit 301C-2 of the QKD apparatus 30C-2 share the QKD key k₂ via the optical transmission line by using the QKD protocol (for example, the BB84 scheme or the like) (step S205).

The QKD processing unit 301A of the QKD apparatus 30A operates an exclusive OR of k₁ and sk (step S206). The QKD processing unit 301A of the QKD apparatus 30A transmits a result of the operation to the key management apparatus 20A (step S207).

The QKD processing unit 301C-1 of the QKD apparatus 30C-1 transmits k₁ to the key management apparatus 20C (step S208).

The QKD processing unit 301C-2 of the QKD apparatus 30C-2 transmits k₂ to the key management apparatus 20C (step S209).

The QKD processing unit 301B of the QKD apparatus 30B transmits k₂ to the key management apparatus 20B (step S210).

The key management processing unit 201C of the key management apparatus 20C operates an exclusive OR of k₁ and k₂ (step S211). The key management processing unit 201C of the key management apparatus 20C transmits (key relay) a result of the operation to the key management apparatus 20B (step S212).

The key management processing unit 201B of the key management apparatus 20B operates an exclusive OR of the result of the operation received from the key management apparatus 20C and k₂ (that is, an exclusive OR of k₁, k₂, and k₂) (step S213). The key management processing unit 201B of the key management apparatus 20B transmits a result of the operation (that is, k₁) to the hub apparatus 10B (step S214). As a result, the hub apparatus 10B can obtain k₁.

The key management processing unit 201A of the key management apparatus 20A transmits the result of the operation of step S207 (that is, the exclusive OR of k₁ and sk) to the hub apparatus 10A (step S215).

The inter-hub communication processing unit 101A of the hub apparatus 10A operates an exclusive OR of the result of the operation received from the key management apparatus 20A and sk (that is, the exclusive OR of k₁, sk, and sk) (step S216). As a result, the hub apparatus 10A can obtain k₁.

As described above, the inter-hub communication processing unit 101A of the hub apparatus 10A and the inter-hub communication processing unit 101B of the hub apparatus 10B can perform encrypted communication with k₁ as an encryption key (step S217).

### [Example 3]

In Example 3, a case where the key management apparatus (reception node) is unreliable will be described. Note that, in Example 3, differences from Example 1 will be described, and the description of the same points as those of Example 1 will be omitted as appropriate.

### • Overall Configuration of Key Exchange System

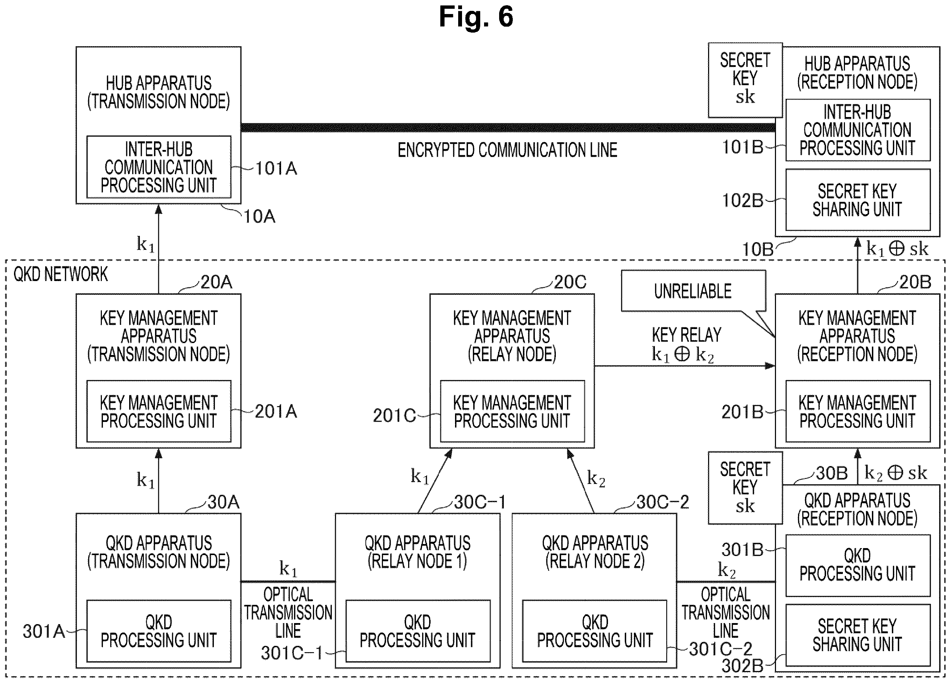

An example of an overall configuration of a key exchange system in Example 3 will be described with reference to Fig. 6.

As illustrated in Fig. 6, the key exchange system in the present example includes a plurality of hub apparatuses 10, a plurality of key management apparatuses 20, and a plurality of QKD apparatuses 30. In the present example, the key management apparatus 20B is an unreliable key management apparatus 20.

The differences from Example 1 are that the hub apparatus 10B includes the secret key sharing unit 102B for sharing the secret key sk with the QKD apparatus 30B, and that the QKD apparatus 30B includes a secret key sharing unit 302B for sharing the secret key sk with the hub apparatus 10B. In addition, the differences from Example 1 are that the QKD apparatus 30C-1 does not include the secret key sharing unit 302C-1. The secret key sharing unit 302C-1 is implemented, for example, by processing that one or more programs installed in the QKD apparatus 30C-1 cause a processor such as a CPU to execute.

### • Processing Executed by Key Exchange System

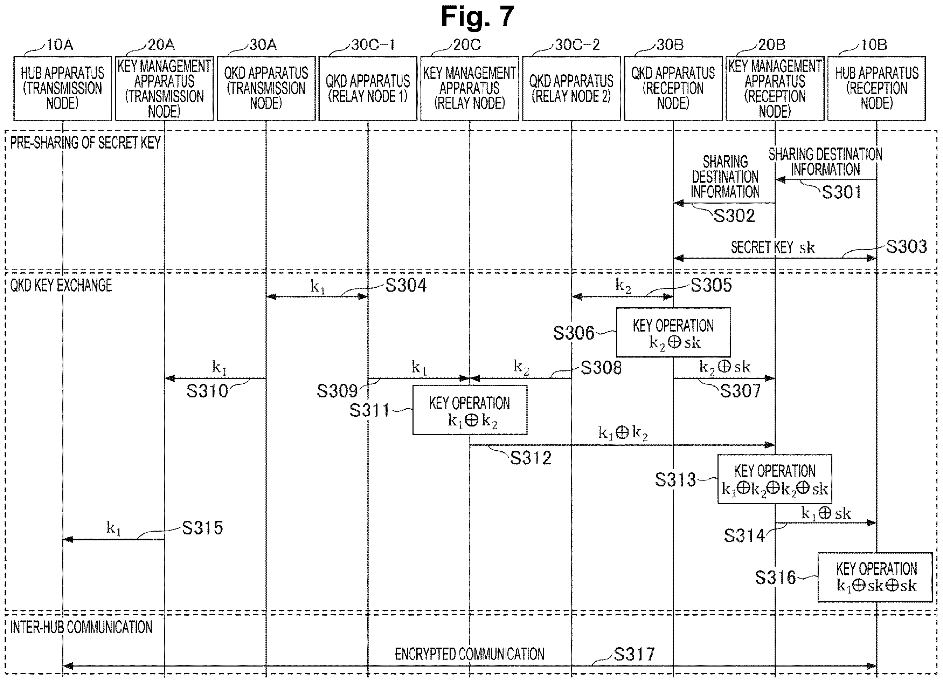

An example of processing executed by the key exchange system in Example 3 will be described with reference to Fig. 7.

The inter-hub communication processing unit 101B of the hub apparatus 10B transmits sharing destination information to the key management apparatus 20B (step S301). In the present example, it is assumed that one of the QKD apparatus 30B or the hub apparatus 10B is an initiator and the other is a responder.

The key management processing unit 201B of the key management apparatus 20B transmits the sharing destination information to the QKD apparatus 30B (step S302).

The secret key sharing unit 302B of the QKD apparatus 30B and the secret key sharing unit 202B of the hub apparatus 10B share the secret key sk by using the key sharing protocol designated in the sharing destination information (step S303).

The QKD processing unit 301A of the QKD apparatus 30A and the QKD processing unit 301C-1 of the QKD apparatus 30C-1 share the QKD key k₁ via the optical transmission line by using the QKD protocol (for example, the BB84 scheme or the like) (step S304).

Similarly, the QKD processing unit 301B of the QKD apparatus 30B and the QKD processing unit 301C-2 of the QKD apparatus 30C-2 share the QKD key k₂ via the optical transmission line by using the QKD protocol (for example, the BB84 scheme or the like) (step S305).

The QKD processing unit 301B of the QKD apparatus 30B operates an exclusive OR of k₂ and sk (step S306). The QKD processing unit 301B of the QKD apparatus 30B transmits a result of the operation to the key management apparatus 20B (step S307).

The QKD processing unit 301C-2 of the QKD apparatus 30C-2 transmits k₂ to the key management apparatus 20C (step S308).

The QKD processing unit 301C-1 of the QKD apparatus 30C-1 transmits k₁ to the key management apparatus 20C (step S309).

The QKD processing unit 301A of the QKD apparatus 30A transmits k₁ to the key management apparatus 20A (step S310).

The key management processing unit 201C of the key management apparatus 20C operates an exclusive OR of k₁ and k₂ (step S311). The key management processing unit 201C of the key management apparatus 20C transmits (key relay) a result of the operation to the key management apparatus 20B (step S312).

The key management processing unit 201B of the key management apparatus 20B operates an exclusive OR of the result of the operation received from the key management apparatus 20C and the result of the operation received from the QKD apparatus 30B (that is, an exclusive OR of k₁, k₂, k₂, and sk) (step S313). The key management processing unit 201B of the key management apparatus 20B transmits a result of the operation (that is, the exclusive OR of k₁ and sk) to the hub apparatus 10B (step S314).

The key management processing unit 201A of the key management apparatus 20A transmits k₁ to the hub apparatus 10A (step S315). As a result, the hub apparatus 10A can obtain k₁.

The inter-hub communication processing unit 101B of the hub apparatus 10B operates an exclusive OR of the result of the operation received from the key management apparatus 20B and sk (that is, an exclusive OR of k₁, sk, and sk) (step S316). As a result, the hub apparatus 10B can obtain k₁.

As described above, the inter-hub communication processing unit 101A of the hub apparatus 10A and the inter-hub communication processing unit 101B of the hub apparatus 10B can perform encrypted communication with k₁ as an encryption key (step S317).

### [Example 4]

In Example 4, a case where the key management apparatus (transmission node) and the key management apparatus (reception node) are unreliable will be described. Note that, in Example 4, differences from Example 1 will be described, and the description of the same points as those of Example 1 will be omitted as appropriate.

### • Overall Configuration of Key Exchange System

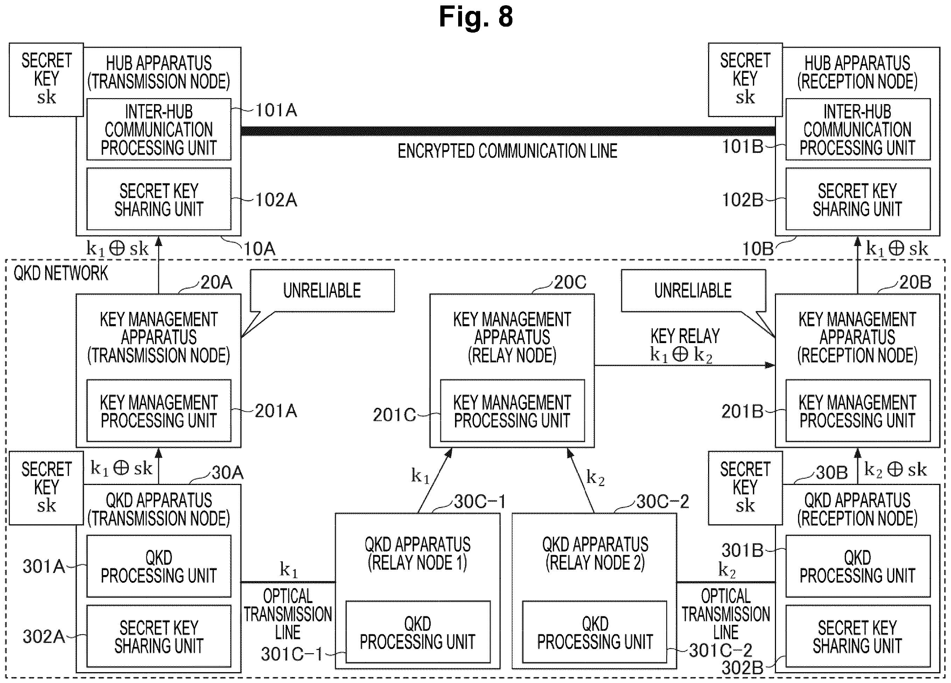

An example of an overall configuration of a key exchange system in Example 4 will be described with reference to Fig. 8.

As illustrated in Fig. 8, the key exchange system in the present example includes a plurality of hub apparatuses 10, a plurality of key management apparatuses 20, and a plurality of QKD apparatuses 30. In the present example, the key management apparatus 20A and the key management apparatus 20B are unreliable key management apparatuses 20.

The differences from Example 1 are that the hub apparatus 10A includes the secret key sharing unit 102A for sharing the secret key sk with the hub apparatus 10B, the QKD apparatus 30A, and the QKD apparatus 30B, and that the QKD apparatus 30A includes the secret key sharing unit 302A for sharing the secret key sk with the hub apparatus 10A, the hub apparatus 10B, and the QKD apparatus 30B. In addition, the differences are that the hub apparatus 10B includes the secret key sharing unit 102A for sharing the secret key sk with the hub apparatus 10A, the QKD apparatus 30A, and the QKD apparatus 30B, and that the QKD apparatus 30B includes the secret key sharing unit 302B for sharing the secret key sk with the hub apparatus 10A, the hub apparatus 10B, and the QKD apparatus 30A. Further, the differences include that the QKD apparatus 30C-1 does not include the secret key sharing unit 302C-1.

### •Processing Executed by Key Exchange System

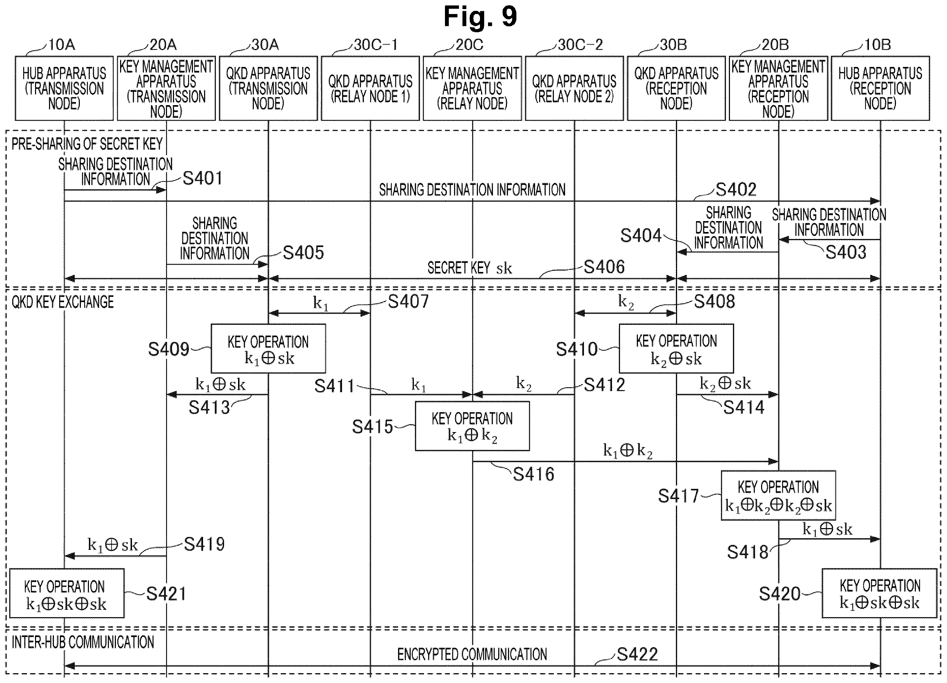

An example of processing executed by the key exchange system in Example 4 will be described with reference to Fig. 9.

The inter-hub communication processing unit 101A of the hub apparatus 10A transmits sharing destination information to the key management apparatus 20A (step S401). In the present example, it is assumed that any one of the hub apparatus 10A, the hub apparatus 10B, the QKD apparatus 30A, or the QKD apparatus 30B is an initiator, and the rest is a responder. In addition, the inter-hub communication processing unit 101A of the hub apparatus 10A transmits the sharing destination information to the hub apparatus 10B (step S402).

The inter-hub communication processing unit 101B of the hub apparatus 10B transmits the sharing destination information to the key management apparatus 20B (step S403). The key management processing unit 201B of the key management apparatus 20B transmits the sharing destination information to the QKD apparatus 30B (step S404). The key management processing unit 201A of the key management apparatus 20A transmits the sharing destination information to the QKD apparatus 30A (step S405).

The secret key sharing unit 102A of the hub apparatus 10A, the secret key sharing unit 102B of the hub apparatus 10B, the secret key sharing unit 302A of the QKD apparatus 30A, and the secret key sharing unit 302B of the QKD apparatus 30B share the secret key sk by using the key sharing protocol designated in the sharing destination information (step S406).

The QKD processing unit 301A of the QKD apparatus 30A and the QKD processing unit 301C-1 of the QKD apparatus 30C-1 share the QKD key k₁ via the optical transmission line by using the QKD protocol (for example, the BB84 scheme or the like) (step S407).

Similarly, the QKD processing unit 301B of the QKD apparatus 30B and the QKD processing unit 301C-2 of the QKD apparatus 30C-2 share the QKD key k₂ via the optical transmission line by using the QKD protocol (for example, the BB84 scheme or the like) (step S408).

The QKD processing unit 301A of the QKD apparatus 30A operates an exclusive OR of k₁ and sk (step S409).

Similarly, the QKD processing unit 301B of the QKD apparatus 30B operates an exclusive OR of k₂ and sk (step S410).

The QKD processing unit 301C-1 of the QKD apparatus 30C-1 transmits k₁ to the key management apparatus 20C (step S411).

Similarly, the QKD processing unit 301C-2 of the QKD apparatus 30C-2 transmits k₂ to the key management apparatus 20C (step S412).

The QKD processing unit 301A of the QKD apparatus 30A transmits the result of the operation (that is, the exclusive OR of k₁ and sk) of step S409 to the key management apparatus 20A (step S413).

Similarly, the QKD processing unit 301B of the QKD apparatus 30B transmits the result of the operation (that is, the exclusive OR of k₂ and sk) of step S410 to the key management apparatus 20B (step S414).

The key management processing unit 201C of the key management apparatus 20C operates an exclusive OR of k₁ and k₂ (step S415). The key management processing unit 201C of the key management apparatus 20C transmits (key relay) a result of the operation to the key management apparatus 20B (step S416).

The key management processing unit 201B of the key management apparatus 20B operates an exclusive OR of the result of the operation received from the key management apparatus 20C and the result of the operation received from the QKD apparatus 30B (that is, an exclusive OR of k₁, k₂, k₂, and sk) (step S417). The key management processing unit 201B of the key management apparatus 20B transmits a result of the operation (that is, the exclusive OR of k₁ and sk) to the hub apparatus 10B (step S418).

On the other hand, the key management processing unit 201A of the key management apparatus 20A transmits the result of the operation received from the QKD apparatus 30A (that is, the exclusive OR of k₁ and sk) to the hub apparatus 10A (step S419).

The inter-hub communication processing unit 101B of the hub apparatus 10B operates an exclusive OR of the result of the operation received from the key management apparatus 20B and sk (that is, an exclusive OR of k₁, sk, and sk) (step S420). As a result, the hub apparatus 10B can obtain k₁.

Similarly, the inter-hub communication processing unit 101A of the hub apparatus 10A operates an exclusive OR of the result of the operation received from the key management apparatus 20A and sk (that is, an exclusive OR of k₁, sk, and sk) (step S421). As a result, the hub apparatus 10A can obtain k₁.

As described above, the inter-hub communication processing unit 101A of the hub apparatus 10A and the inter-hub communication processing unit 101B of the hub apparatus 10B can perform encrypted communication with k₁ as an encryption key (step S422).

### [Hardware Configuration of Each Apparatus]

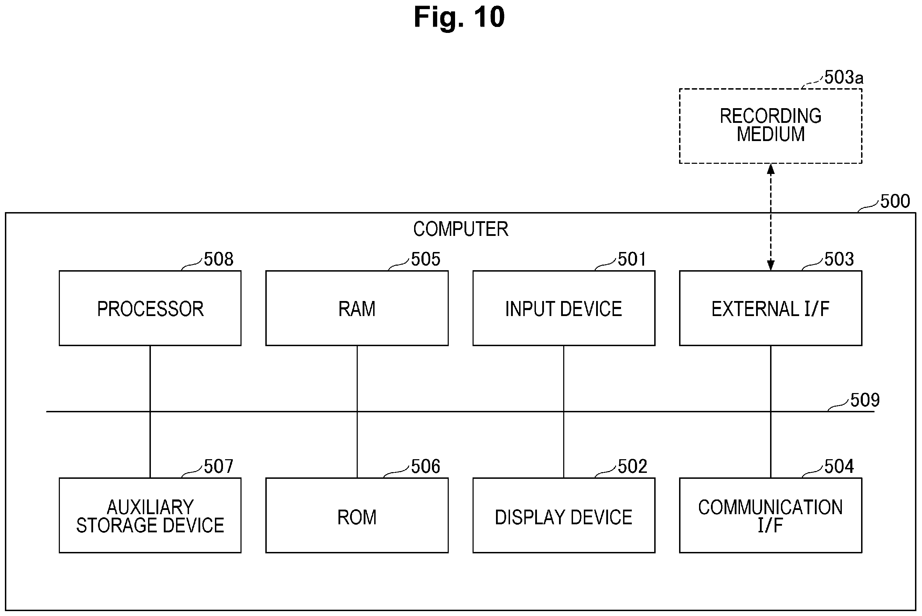

A hub apparatus 10, a key management apparatus 20, and a QKD apparatus 30 can be implemented by, for example, a hardware configuration of a computer 500 illustrated in Fig. 10.

The computer 500 illustrated in Fig. 10 includes an input device 501, a display device 502, an external I/F 503, a communication I/F 504, a random access memory (RAM) 505, a read only memory (ROM) 506, an auxiliary storage device 507, and a processor 508. These pieces of hardware are communicably connected to each other via a bus 509.

The input device 501 is, for example, a keyboard, a mouse, a touch panel, a physical button, or the like. The display device 502 is, for example, a display, a display panel, or the like. Note that the computer 500 does not necessarily include at least one of the input device 501 or the display device 502, for example.

The external I/F 503 is an interface with an external device such as a recording medium 503a. The computer 500 can read or write the recording medium 503a via the external I/F 503. Examples of the recording medium 503a include a flexible disk, a compact disc (CD), a digital versatile disk (DVD), a secure digital memory card (SD memory card), a universal serial bus (USB) memory card, and the like.

The communication I/F 504 is an interface for connecting the computer 500 to a communication network. The RAM 505 is a volatile semiconductor memory (storage device) that temporarily holds programs and data. The ROM 506 is a non-volatile semiconductor memory (storage device) capable of holding programs and data even when the power is turned off. The auxiliary storage device 507 is, for example, a storage device such as a hard disk drive (HDD), a solid state drive (SSD), or a flash memory. The processor 508 is, for example, an arithmetic device such as a CPU.

The hub apparatus 10, the key management apparatus 20, and the QKD apparatus 30 according to the present embodiment have, for example, the hardware configuration of the computer 500 illustrated in Fig. 10, thereby being able to implement the above-described various types of processing. Note that the hardware configuration of the computer 500 illustrated in Fig. 10 is an example, and the hardware configuration of the computer 500 is not limited thereto. For example, the computer 500 may include a plurality of auxiliary storage devices 507 and a plurality of processors 508, does not necessarily include a part of the illustrated hardware, or may include various types of hardware other than the illustrated hardware.

### [Conclusion]

As described above, in the key exchange system in each of the above examples, the secret key sk is shared between a QKD apparatus that passes a QKD key to an unreliable key management apparatus and a hub apparatus that receives the QKD key from the unreliable key management apparatus, and then the key subjected to an exclusive OR with the secret key sk is exchanged with the unreliable key management apparatus. As a result, the key information is concealed from the unreliable key management apparatus, and security of key exchange by the QKD network is guaranteed.

### [Key Sharing Protocol for Secret Key sk]

In each of the above examples, the key sharing protocol for sharing the secret key sk is not particularly limited, and for example, the secret key sk only needs to be shared by using public key cryptography and a key encapsulation mechanism (KEM). At this time, for example, by using post-quantum cryptography such as NTRU that is a type of lattice-based cryptography, it is possible to perform secure key exchange also for a quantum computer, and thus higher security can be implemented.

The present invention is not limited to the above-mentioned specifically disclosed embodiments, and various modifications and changes, combinations with known technologies, and the like can be made without departing from the scope of the claims.

### Reference Signs List

- 10: Hub apparatus
- 20: Key management apparatus
- 30: QKD apparatus
- 101: Inter-hub communication processing unit
- 102: Secret key sharing unit
- 201: Key management processing unit
- 301: QKD processing unit
- 302: Secret key sharing unit
- 500: Computer
- 501: Input device
- 502: Display device
- 503: External I/F
- 503a: Recording medium
- 504: Communication I/F
- 505: RAM
- 506: ROM
- 507: Auxiliary storage device
- 508: Processor
- 509: Bus

## Claims

1. A key exchange system comprising:
a quantum key distribution (QKD) network including
a plurality of QKD apparatuses that performs exchange of a key by using a quantum key distribution protocol, and
a plurality of key management apparatuses that relays the key; and
a plurality of hub apparatuses that performs encrypted communication by using the key received from the key management apparatuses, wherein
one of the QKD apparatuses includes
a transmission unit configured to, in a case where the key is transmitted to an unreliable key management apparatus among the plurality of key management apparatuses, use a secret key shared in advance with a hub apparatus that receives the key via the unreliable key management apparatus, and transmit the key subjected to an exclusive OR with the secret key to the unreliable key management apparatus, and
the hub apparatus includes
a key acquisition unit configured to**,** in a case where the key is received from the unreliable key management apparatus among the plurality of key management apparatuses, use the secret key to calculate an exclusive OR of the secret key and the key.

2. The key exchange system according to claim 1,
wherein the secret key is a key of post-quantum cryptography.

3. A quantum key distribution (QKD) apparatus in a key exchange system including: a QKD network including a plurality of QKD apparatuses that performs exchange of a key by using a quantum key distribution protocol and a plurality of key management apparatuses that relays the key; and a plurality of hub apparatuses that performs encrypted communication by using the key received from the key management apparatuses, the QKD apparatus comprising:
a transmission unit configured to, in a case where the key is transmitted to an unreliable key management apparatus among the plurality of key management apparatuses, use a secret key shared in advance with a hub apparatus that receives the key via the unreliable key management apparatus, and transmit the key subjected to an exclusive OR with the secret key to the unreliable key management apparatus.

4. A hub apparatus in a key exchange system including:
a quantum key distribution (QKD) network including a plurality of QKD apparatuses that performs exchange of a key by using a quantum key distribution protocol and a plurality of key management apparatuses that relays the key; and a plurality of hub apparatuses that performs encrypted communication by using the key received from the key management apparatuses, the hub apparatus comprising:
a key acquisition unit configured to, in a case where the key is received from an unreliable key management apparatus among the plurality of key management apparatuses, use a secret key shared in advance with a QKD apparatus that transmits the key to the unreliable key management apparatus, and calculate an exclusive OR of the secret key and the key.

5. A method used in a key exchange system including: a quantum key distribution (QKD) network including a plurality of QKD apparatuses that performs exchange of a key by using a quantum key distribution protocol and a plurality of key management apparatuses that relays the key; and a plurality of hub apparatuses that performs encrypted communication by using the key received from the key management apparatuses, the method comprising:
a transmission procedure of, in a case where the key is transmitted to an unreliable key management apparatus among the plurality of key management apparatuses, using, by one of the QKD apparatuses, a secret key shared in advance with a hub apparatus that receives the key via the unreliable key management apparatus, and transmitting the key subjected to an exclusive OR with the secret key to the unreliable key management apparatus; and
a key acquisition procedure of, in a case where the key is received from the unreliable key management apparatus among the plurality of key management apparatuses, using, by the hub apparatus, the secret key to calculate the exclusive OR of the secret key and the key.

6. A program for causing a computer to function as a QKD apparatus or a hub apparatus included in the key exchange system according to claim 1 or 2.
